# EUROPÄISCHE PATENTSCHRIFT

(11) **EP 1 299 321 B1**
(45) Veröffentlichungstag und Bekanntmachung des Hinweises auf die Patenterteilung: **01.02.2006**
(21) Anmeldenummer: 01976051.1
(22) Anmeldetag: 19.06.2001
(51) Int. Cl.: C04B 26/02, B29B 17/00, B29C 43/00, C04B 14/06

(54) **WERKSTOFF SOWIE VERFAHREN UND VORRICHTUNG ZU SEINER HERSTELLUNG**
MATERIAL AND METHOD AND DEVICE FOR PRODUCING THE SAME
MATERIAU, DE MEME QUE PROCEDE ET DISPOSITIF APPROPRIES POUR LE PRODUIRE

(30) Priorität: 30.06.2000 RU 2000116996
(43) Veröffentlichungstag der Anmeldung: 09.04.2003
(73) Patentinhaber: Manes, Michael, 99310 Wachsenburggemeinde (DE); Tarassenko, Alexander Michailowitsch, Stadt Podolsk, 142100 Moskauer Gebiet (RU); Shukow, Alexander Iwanowitsch, Stadt Podolsk, 143100 Moskauer Gebiet (RU)
(72) Erfinder: Manes, Michael, 99310 Wachsenburggemeinde (DE); Tarassenko, Alexander Michailowitsch, Stadt Podolsk, 142100 Moskauer Gebiet (RU); Shukow, Alexander Iwanowitsch, Stadt Podolsk, 143100 Moskauer Gebiet (RU)
(74) Vertreter: Engel, Christoph Klaus
(86) Internationale Anmeldenummer: PCT/EP2001/006910
(87) Internationale Veröffentlichungsnummer: WO 2002/000567

(56) Entgegenhaltungen:
- WO-A-93/08974
- WO-A-94/27800
- WO-A-96/02373
- WO-A-96/17807
- DE-U- 29 518 128
- DE-U- 29 805 590
- US-A- 3 671 624
- DATABASE WPI Week 199643 Derwent Publications Ltd., London, GB; AN 1996-430375 XP002198356 & JP 08 213185 A (OSAKA CHUO DIECAST KK)

## Beschreibung

Die vorliegende Erfindung betrifft ein Verfahren zur Herstellung eines Werkstoffs, der im Wesentlichen aus Sand und Polymeren besteht, wobei weitere Zuschlagsstoffe in dem Werkstoff enthalten sein können. Außerdem betrifft die Erfindung eine Vorrichtung, mit welcher das Verfahren ausgeführt werden kann.

Es sind verschiedentlich Versuche bekannt geworden, neuartige Verbundwerkstoffe herzustellen, insbesondere um die vorhandenen Ressourcen besser zu nutzen und recycelbare Werkstoffe einer Wiederverwertung zuzuführen. Generell ist es bekannt, bestimmte Kunststoffe (d.h. auch Polymere) in einem Wiederverwertungsprozess einzuschmelzen und als Ausgangsmaterialien für neue Kunststofferzeugnisse zu verwenden.

In der WO-A-9427800 ist ein Verfahren zur Herstellung eines Baumaterials aus einer Mischung aus thermoplastischem Abfall und Mineralstoffen beschrieben. Aus dieser Druckschrift ist es bekannt, dass Mineralstoffe und Kunststoffmaterialien unter geeigneter Erwärmung miteinander vermischt werden können, um ein entsprechendes Baumaterial herzustellen. Die Erwärmung der Ausgangsstoffe soll demnach in einer feuchten, Wasser enthaltenden Umgebung erfolgen, in welcher das Kunststoffmaterial plastifiziert und ohne Zugabe von chemischem Lösungsmittel geschmolzen wird. Außerdem ist es erforderlich, nach Herstellung der erhitzten Mischung aus Mineralstoff und Kunststoff einen zusätzlichen Füllstoff hinzuzufügen, um entsprechende Festigkeiten zu erreichen. Die feuchte Prozessumgebung ist erforderlich, um ein Entzünden und Verbrennen des Kunststoffmaterials zu verhindern. Dabei soll der Mineralstoff nicht deutlich über die Schmelztemperatur des Kunststoffes erhitzt werden, wobei auch eine punktuelle Überhitzung zu vermeiden ist.

Aus der GB 876 271 ist es bekannt, zur Herstellung eines Konstruktionsstoffes ein Schmelzgemisch aus Polyäthylen, Asphalt und Füllstoffen zu erzeugen. Als Füllstoff eignet sich insbesondere Sand, bis zu einem Gewichtsanteil von 50%. Das Hauptproblem dieses bekannten Stoffes ist seine leichte Brennbarkeit und die relativ geringe Festigkeit, wodurch seine Einsatzgebiete beschränkt sind. Das Herstellungsverfahren ist außerdem teuer. Die Einsatzmöglichkeiten dieses bekannten Stoffes sind auch dadurch beschränkt, dass er aufgrund der enthaltenen Grundstoffe toxische Eigenschaften aufweist.

Aus der CN 11 622 523 ist ein in Plattenform gepresster Stoff bekannt, der größere Anteile von Sand und Gummi enthält. Dieser Stoff dient vor allem der Herstellung von Gussformen. Die Herstellung ist teuer und der resultierende Verbundwerkstoff ist relativ unbeständig, vor allem gegen aggressive Substanzen.

Die Aufgabe der vorliegenden Erfindung besteht somit darin, ein Verfahren zur Herstellung eines Werkstoffes aus Sand und Polymeren bereitzustellen, mit dessen Hilfe solche Werkstoffe mit verbesserten Eigenschaften hergestellt werden können. Dieser Werkstoff soll dabei aufgrund der verwendeten Ausgangsmaterialien besonders preiswert herstellbar und gegenüber anderen Medien weitgehend resistent sein, verbesserte Materialeigenschaften aufweisen, eine ökologische Wiederverwertung vorhandener Rohstoffe ermöglichen und sich beispielsweise aufgrund einer erhöhten Brandsicherheit zum Einsatz in den verschiedensten Bereichen der Technik eignen.

Diese und weitere Aufgaben werden von dem erfindungsgemäßen Verfahren gelöst, welches die folgenden Verfahrensschritte umfässt :
- Erhitzen des Sandes auf eine Temperatur zwischen 300°C und 800°C;
- Zuführen des erhitzten Sandes und des Polymers in einen geschlossenen Mischkessel, der eine Erdungselektrode und ein Überdruckventil besitzt, unter Aufrechterhaltung einer Mischtemperatur, die oberhalb der Schmelztemperatur des Polymers liegt;
- Mischen des Sandes und des Polymers zur Erzeugung eines heißen Schmelzgemisches;
- Einbringen des Schmelzgemisches in eine Pressform;
- Abkühlen des Schmelzgemisches unter Druck bis zum Erstarren des Schmelzgemisches in der Pressform;
- weiteres Abkühlen des erstarrten Werkstoffes unter Normaldruck.

Das weitere Abkühlen des Werkstoffes unter Normaldruck erfolgt, bis die Kristallisationsprozesse abgeschlossen sind.

Ein wesentlicher Vorteil dieses Werkstoffes besteht darin, dass Sand als ein Hauptbestandteil des Werkstoffes in großen Mengen und zu geringen Kosten zur Verfügung steht. Da an die Qualität der verwendeten Polymere keine hohen Anforderungen gestellt werden, können Abfallkunststoffe zur Herstellung des Werkstoffes wiederverwertet werden. Aufgrund der Abkühlung des Schmelzgemisches unter erhöhtem Druck entsteht ein Werkstoff, der hohe Festigkeiten aufweist und damit hohen mechanischen Beanspruchungen ausgesetzt werden kann. Durch die homogene Struktur des Werkstoffes ist sichergestellt, dass die Polymere den Sand und mögliche Zuschlagsstoffe umschließen, so dass das Austreten von Salzen oder anderen Spurenelementen weitgehend vermieden wird, wodurch der Werkstoff über einen langen Zeitraum seine vorteilhaften Eigenschaften behält und beispielsweise kaum Verwitterungserscheinungen zeigt.

Die vorteilhaften Eigenschaften des Werkstoffes lassen sich im Vergleich zu anderen Werkstoffen wie folgt zusammenfassen:
- unzerbrechlich und schlagfest wie Kunststoff,
- abriebfester als Beton,
- mechanisch bearbeitbar, beispielsweise durch Sägen, Bohren und Gewindeschneiden,
- wasserabweisend wie Glas,
- hohe Resistenz gegen Chemikalien (Laugen, Säuren, Salze),
- hoher elektrischer Wiederstand,
- hoher Wärmewiederstand,
- gutes Anbindeverhalten beim Zusammenwirken mit Beton,
- spätere Wiederverwertbarkeit im gleichen Verarbeitungsprozess,
- Elastizität und Farbe sind durch unterschiedliche Zuschlagstoffe einstellbar,
- schwer entflammbar.

Aufgrund dieser Eigenschaften ist ein bedeutsames Einsatzgebiet des Werkstoffes im Bauwesen zu sehen. Aus dem Werkstoff können beispielsweise Steine, Platten oder speziell geformte Bauelemente hergestellt werden.

Ebenso ergeben sich wichtige Einsatzfelder im Bereich der Elektrotechnik, da die Isolationseigenschaften mit denen von Keramikisolatoren vergleichbar sind. Aus dem Werkstoff können daher Befestigungssysteme, Isolatoren oder Gehäuse von Elektrogeräten hergestellt. Der Werkstoff kann auch als Trägermaterial für elektrotechnische Systeme, insbesondere Photovoltaikelemente verwendet werden. Ebenso kann der Werkstoff metallische Materialien ersetzen, z.B. bei der Herstellung von energieintensiven Produkten aus Gusseisen oder Spitzgussaluminium. Denkbar ist der Einsatz des Werkstoffes zur Herstellung von Kanaldeckeln oder dergleichen.

Bei verschiedenen Ausführungsformen kann der eigentliche Mischvorgang auf unterschiedliche Weise erfolgen. Der heiße Sand und die Polymere können schrittweise miteinander vermischt werden, so dass das angestrebte Gewichtsverhältnis im Wesentlichen während des gesamten Mischvorganges aufrechterhalten bleibt. Ebenso ist es möglich, einer größeren Menge erhitzten Sandes die gewünschte Menge der Polymere schrittweise zuzuführen, wodurch sichergestellt ist, dass die Polymere relativ schnell die gewünschte Temperatur erreichen. Außerdem ist es möglich, den erhitzten Sand in die gewünschte Gesamtmenge des Polymers zuzuführen, wobei das Polymer entweder als Granulat oder bereits als Polymerschmelze vorliegen kann.

Eine vorteilhafte Ausführungsform des Werkstoffs zeichnet sich dadurch aus, dass er mindestens zu 50% aus Sand und mindestens zu 15% aus Polymer besteht (bezogen auf die Gesamtmasse). Durch diese Grenzen ist der bevorzugte Bereich des Verhältnisses der Hauptstoffe Sand und Polymer bekannt gegeben. Vorzugsweise wird der Sand also 50% bis 85% der Gesamtmasse des Werkstoffes umfassen, während der Polymeranteil zwischen 15% und 50% liegt. Bei diesen Verhältnissen ergeben sich besonders feste Werkstoffe, die preiswert herzustellen sind, da der Polymeranteil relativ gering gehalten werden kann. Es ist vorteilhaft, wenn das Schmelzgemisch in der Pressform bei einem Druck von 1 bis 40 kPa bis auf eine Temperatur von 60 bis 100°C abgekühlt wird. Durch den erhöhten Druck während der Abkühlphase erhält der Werkstoffe eine homogene Struktur, es werden Gaseinschlüsse vermieden und die Endfestigkeit des Werkstoffes erhöht sich.

Um dem Werkstoff besondere Eigenschaften zu verleihen, können bereits in der Phase des Erzeugens des heißen Schmelzgemisches unterschiedliche Zuschlagstoffe zugesetzt werden. Beispielsweise ist es vorteilhaft, organische oder anorganische Fasern zuzusetzen, um damit eine Bewehrung auszubilden, die dem Werkstoff erhöhte Biege- und Zugfestigkeit verleiht. Zur farblichen Gestaltung des Werkstoffes können dem Gemisch Farbstoffe bzw. Pigmente zugesetzt werden, wobei darauf zu achten ist, dass diese Farbstoffe in dem heißen Schmelzgemisch nicht zerstört werden. Um die Temperaturen des Schmelzgemisches an derartige Anforderungen anzupassen, können Polymere mit geringeren Schmelztemperaturen verwendet werden, wobei die Zuschlagstoffe erst bei einer Schmelzgemischtemperatur zugesetzt werden, die nur geringfügig oberhalb der Schmelztemperatur der Polymere liegt.

Wenn der Werkstoff eine höhere Elastizität besitzen soll, können dem Gemisch chemische Weichmacher oder Plastifikatoren zugesetzt werden. Schmierstoffe werden benutzt, um den Herstellungsprozess zu vereinfachen. Bei bestimmten Anwendungsfällen kann es vorteilhaft sein, wenn als Zuschlagstoffe Silikate verwendet werden.

Es ist weiterhin zweckmäßig, wenn bei der Herstellung des Werkstoffes Kunststoffabfälle zerkleinert werden, um ein Polymergranulat bereitzustellen, welches als Ausgangsstoff für die Herstellung des Schmelzgemisches dient. Auf diese Weise können in großen Mengen zur Verfügung stehende Kunststoffabfälle verwertet werden, wobei auch aufgrund der Granulierung homogene Materialeigenschaften des Werkstoffes erzielbar sind.

Vorzugsweise besitzt der für den Werkstoff zu verwendende Sand eine Korngröße von 0,5 bis 0,9 mm. Bei anderen Ausführungsformen kann die Korngröße aber auch zwischen 0,005 und 5 mm variieren.

Der Werkstoff kann in unterschiedlichen Bereichen der Technik eingesetzt werden. Insbesondere können Elektroisolationselemente aus dem Werkstoff hergestellt werden. Hierbei ist es vorteilhaft, das der spezifische elektrische Volumenwiederstand des erfindungsgemäßen Werkstoffes sehr hoch ist. Weiterhin eignet sich der Werkstoff besonders zur Herstellung von Bodenbelagelementen, wie Bausteinen, Gehwegplatten und vergleichbaren Elementen. Bei derartigen Anwendungen ist es besonders vorteilhaft, dass der Werkstoff gegen die meisten Chemikalien resistent, wasserbeständig und UV-unempfindlich ist.

Die Erfindung gibt außerdem eine Vorrichtung an, die sich zur Ausführung des erfindungsgemäßen Verfahrens besonders eignet. Die wesentlichen Merkmale dieser Vorrichtung sind im Anspruch 12 definiert. Besonders hervorzuheben ist das Vorhandensein einer Erdungselektrode im Sandzuführungsabschnitt des Mischkessels, die der elektrischen Entladung des erhitzten Sandes dient. Auf diese Weise ist sichergestellt, dass es im heißen Schmelzgemisch nicht zu elektrostatischen Entladungen kommt, die eine Entzündung des Gemisches und unter Umständen explosionsartige Verbrennungen zur Folge hätten.

Weitere Vorteile, Einzelheiten und Weiterbildungen der vorliegenden Erfindung ergeben sich aus der nachfolgenden Beschreibung bevorzugter Ausführungsformen, Herstellungsmöglichkeiten und Konfigurationsbeispiele.

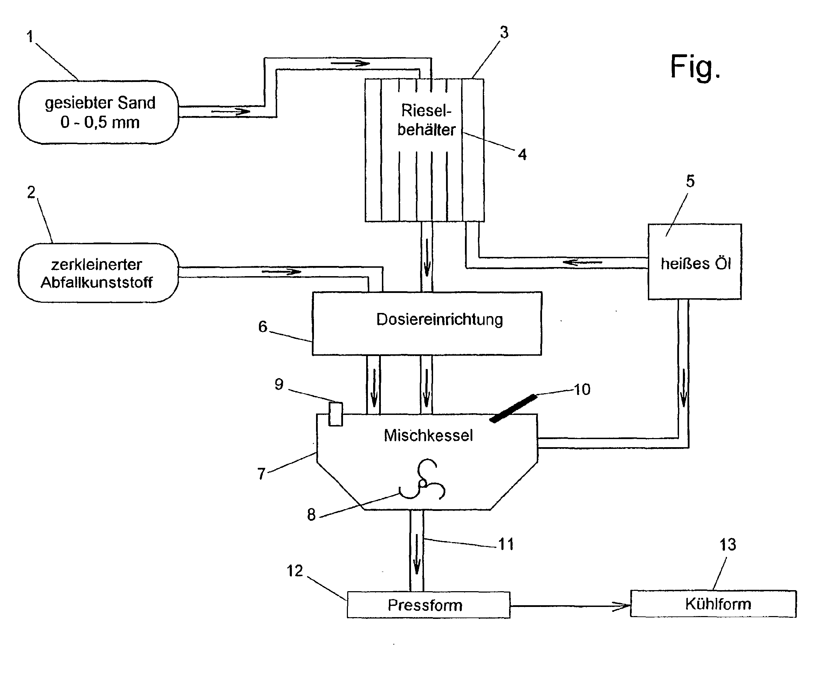

Die einzige Figur zeigt in Form eines Blockschaltbildes eine Ausführungsform einer Vorrichtung, die zur Herstellung des erfindungsgemäßen Werkstoffes verwendet werden kann.

Als erstes wird ein Beispiel eines Werkstoffes und das für seine Herstellung auszuführende Verfahren erläutert. Der Werkstoff besitzt die folgenden Massebestandteile: 72% Sand, 27,5% Polyäthylen, 0,5% Farbstoff. Im konkreten Beispiel wird Sekundärpolyäthylen verwendet, d.h. aus Kunststoffabfällen gewonnenes Polyäthylen. Als Farbstoff dient bei dem hier angegebenen Beispiel Eisenmennige, woraus eine rotbraune Farbe des Werkstoffs resultiert. Generell können auch andere mineralische oder organische Farbstoffe, wie z.B. Kohlenmonoxid, Titandioxid oder Kobaltblau verwendet werden. Bei der Herstellung wir als erstes der Sand auf etwa 400°C erhitzt. Es können verschiedene Sandarten eingesetzt werden, nämlich Natursand, wie z.B. Grubensand, Flusssand, Seesand oder Wüstensand; und künstlicher Sand, wie z.B. Nebenprodukte aus Steinbrüchen. Als Ausgangsstoff kann auch besonders hergestellter Sand aus grobkristallinem Marmor, Marmorkalksteinen, Dolomiten, grobkristallinem Granit, Syeniten, Ziegel, Dachziegel, Tuffen, Anthrazit, Tonrohren, Porzellan, Glas, Basalt, Quarzit, Bimsstein, Schlacken, Perlit, Vermikulit angewendet werden.

Dem erhitzen Sand (Korngröße etwa 0,5mm - 0,9mm) werden bei stetiger Vermischung die Sekundärpolymere zugesetzt. Beim konkreten Beispiel wurden als Polymere Haushaltsabfallprodukte, wie z.B. Folien, Flaschen und andere Verpackungen verwendet. Generell können Mischungen aus unterschiedlichen Polymeren oder reine Polymere eingesetzt werden. Es ist ebenso möglich, primäre oder sekundäre Polymere zu verwenden, bzw. Mischungen aus solchen Polymeren einzusetzen. Üblicher Weise werden thermoplastische Polymere angewendet, was ökologische und ökonomische Vorteile mit sich bringt.

Neben dem Polymer wird dem Gemisch schrittweise der Farbstoff zugesetzt. Die Vermischung der Ausgangsmaterialien wird solange fortgesetzt, bis eine homogene plastische Masse vorliegt, wobei die Temperatur bis auf etwa 200°C sinkt, jedoch nicht unter den Schmelzpunkt der verwendeten Polymere. Nach Fertigstellung des Schmelzgemisches wird die vorliegende Masse unter Einsatz herkömmlicher Verfahren in eine Pressform eingebracht. Die Pressform kann zur Abkühlung der Masse aktive Kühleinrichtungen besitzen oder eine passive Wärmeabgabe ermöglichen, was jedoch den Verarbeitungsprozess verlängert. Während der nachfolgenden Abkühlung wird ein Pressdruck von etwa 29 kPa aufrecht erhalten, der erst nach Erstarrung der Masse, also nach Unterschreitung der Schmelztemperatur der Polymere aufgehoben wird, was im erläutertem Beispiel bei etwa 95°C der Fall ist. Es wird darauf hingewiesen, dass auch mit deutlich höheren Drücken gearbeitet werden kann, wenn dies für bestimmte Eigenschaften der herzustellenden Produkte zweckdienlich ist. Bei einer geeigneten Kühlung der Pressform ergibt sich eine Verarbeitungszeit von etwa 150 Sekunden.

Nach Fertigstellung des Werkstoffes konnten an dem erzeugten Probestück die folgenden Eigenschaften nachgewiesen werden:

| | |
|---|---|
| Farbe: | rotbraun |
| Oberfläche: | homogen, matt glänzend, porenlos |
| Dichte: | 2700 kg/m³ |
| Wasserabsorption: | null |
| Bruchspannungen: | Biegespannung = 150 MPa |
| | Zugspannung = 90 MPa |
| | Druckspannung = 200 MPa |
| Säurefestigkeit: | 99% |
| Alkalifestigkeit: spezifischer elektrischer | 96,5% |
| Volumenwiderstand: | 1 x 10¹⁵ Ohm x cm |

Das Probestück ist schwer brennbar und wird bei der Einwirkung von Feuer allmählich verkohlt. Sobald das Feuer entfernt wird, stoppt die Verkohlung des Werkstoffes.

Es ist darauf hinzuweisen, dass abweichend von dem beschriebenen Bespiel andere Zusätze bzw. Zuschlagstoffe in das Schmelzgemisch eingefügt werden können, um andere Eigenschaften des Werkstoffes zu erzielen.

Zur Verbesserung der Druckfestigkeit können bewehrende Zusätze in Form von organischen oder mineralischen Fasern eingebracht werden. Dazu eignen sich beispielsweise Asbestfasern, Glasfasern, Azetatfasern oder Baumwollkämmlinge. Als Plastifikatoren eignen sich beispielsweise Dibutil- und Dioktilphthalat sowie Trikresilphosphat zur Erhöhung der Elastizität des Werkstoff.

Um während des Pressens das Ankleben des Schmelzgemisches in der Pressform zu verhindern, können Schmierstoffe wie Stearin oder Wachs hinzugefügt werden.

Während der Herstellung des Schmelzgemisches muss besonders darauf geachtet werden, dass der erhitzte Sand nicht zu einer elektrostatischen Aufladung führt, die Entladungserscheinungen hervorrufen könnte, durch welche das Schmelzgemisch entzündet wird. Dazu ist es zweckmäßig, wenn geeignete Erdungselemente im Mischkessel vorgesehen sind. Beispielsweise kann der erhitzte Sand bei der Zufuhr zum Mischkessel an einer geerdeten Elektrode vorbeigeführt werden, so dass die einzelnen Sandkörner auf Erdpotential gebracht werden.

Vor dem Erstarren des Schmelzgemisches in der Pressform können verschiedene Elemente und Stoffe in den Werkstoff eingepresst werden. Beispielsweise könnte der Werkstoff den Griff eines Schraubendrehers bilden, wenn der Metalldorn des Schraubendrehers in die Masse eingepresst wird. Ein solcher Schraubendreher würde sich aufgrund des hohen elektrischen Widerstandes des Werkstoffes auch zum Einsatz in elektrotechnischen Bereichen eignen. Wenn Kunststoffabfälle verwendet werden, muss in solchen Fällen darauf geachtet werden, dass die Kunststoffabfälle nicht mit elektrisch leitenden Materialien (beispielsweise Aluminiumfolien) verunreinigt sind, da dann die Gefahr einer elektrischen Verbindung zwischen der Außenseite des Griffs und dem Metalldorn des Schraubendrehers bestehen würde.

Zur Herstellung des erfindungsgemäßen Werkstoffes ist es in jedem Fall erforderlich, dass heiße Schmelzgemisch aus Sand und Polymer bereitzustellen. Dies kann jedoch auf unterschiedliche Weise erfolgen. Die generellen Möglichkeiten werden nachfolgend kurz erläutert.

Gemäß einer ersten Variante wird unter Umgebungstemperaturen ein mechanisch gut durchmischtes Gemisch aus Sand und granuliertem oder zerkleinertem Polymer und gegebenenfalls Zuschlagsstoffen hergestellt. Dieses Gemisch wird unter stetigem weiterem Umrühren erhitzt, bis eine homogene plastische Masse vorliegt. In Abhängigkeit von den verwendeten Polymeren ist dies bei Temperaturen zwischen 90 und 500°C der Fall.

Eine zweite Möglichkeit besteht darin, den Sand vorerst allein auf eine Temperatur zwischen 200°C und 800°C zu erhitzen. Die erforderliche Endtemperatur ist wiederum abhängig von den eingesetzten Polymeren. In einem geeigneten Mischkessel wird unter stetigem Umrühren dem erhitzten Sand die erforderliche Menge des Polymers oder des Gemisches aus Polymeren und Zuschlagsstoffen allmählich zugeführt. Eine abgewandelte Herstellungsmöglichkeit besteht darin, den erhitzten Sand allmählich dem Polymer zuzuführen, wiederum unter stetiger Vermischung. Beim Zusammenführen der Hauptbestandteile sinkt die Temperatur des Gemisches, wobei darauf zu achten ist, dass die Temperatur des Gemisches immer oberhalb des Schmelzpunktes der Polymere liegt. Ergebnis dieser Vermischung ist wiederum eine homogene plastische Masse, die bei der gewünschten Temperatur der nachfolgenden Druckbearbeitung in der Pressform zugeführt wird.

Ein dritte Möglichkeit besteht darin, dem auf eine Temperatur zwischen 90 und 450°C erhitzten Sand ein bereits geschmolzenes Polymer oder ein geschmolzenes Gemisch aus Polymeren unter stetigem Umrühren zuzuführen. Zuschlagsstoffe werden dann ebenfalls zugeführt. Das Schmelzgemisch wird bis zum Erreichen eines homogenen plastischen Zustands gerührt.

Ebenso kann die Herstellung des Werkstoffes erfolgen, indem einem geschmolzenem Polymer der auf eine Temperatur zwischen 90 und 450°C erhitzte Sand sowie die Zuschlagsstoffe zugeführt werden, wobei durch stetiges Umrühren eine homogene plastische Masse erzielt wird.

Die fünfte Variante der Erzeugung des heißen Schmelzgemisches besteht darin, ein Sekundärgemisch einzusetzen, welches aus vorher miteinander verschmolzenen Polymeren und Sand besteht.

Das Sekundärgemisch wird zerkleinert und granuliert und bis zum Erhalt einer homogenen plastischen Masse erhitzt und umgerührt, wobei die Endtemperatur zwischen 90°C und 450°C liegt, in Abhängigkeit von den verwendeten Polymeren im Sekundärgemisch. Diese Variante ist besonders vorteilhaft, wenn der Werkstoff in dezentralen Fertigungsanlagen zur Herstellung unterschiedlicher Erzeugnisse eingesetzt werden soll, wobei in diesen Fertigungsanlagen nicht die engen Prozessbedingungen eingehalten werden müssen, die für die erste Erzeugung des Sekundärgemisches notwendig sind. Beim Einsatz des Sekundärgemisches besteht beispielsweise keine Gefahr einer Selbstentzündung, da eine elektrostatische Aufladung des bereits im Polymer gebundenen Sandes nicht eintritt.

Ebenso kann dieses Herstellungsverfahren genutzt werden, wenn aus dem Werkstoff bestehende Erzeugnisse in einem Recyclingprozess der Wiederverwertung zugeführt werden sollen. Bei der Wiederverwertung von solchen Werkstoffen können die Materialeigenschaften geändert werden, indem dem aus Altwerkstoffen bestehenden Schmelzgemisch weitere Teile von Sand, Polymeren oder anderen Zuschlagsstoffen zugeführt werden.

Der während der Abkühlung des Schmelzgemisches in der Pressform erforderliche Druck hängt von den angestrebten Eigenschaften des herzustellenden Produktes und von den Eigenschaften der verwendeten Ausgangsstoffe ab. Der verwendete Druck kann zwischen 1 kPa und 40 kPa liegen. Der benötigte Druck kann herkömmlicherweise durch Pressen, Walzen oder dergleichen aufgebaut werden.

Unter Bezugnahme auf die beigefügte Figur wird nachfolgend eine bevorzugte Ausführungsform einer Vorrichtung beschrieben, die zur Herstellung des erfindungsgemäßen Werkstoffes und zur Ausführung des beschriebenen Verfahrens eingesetzt werden kann.

Die hauptsächlichen Ausgangsstoffe werden in einem Sandvorratsbehälter 1 bzw. einem Kunststoffvorratsbehälter 2 gespeichert. Bei der dargestellten Ausführungsform befindet sich in dem Sandvorratsbehälter 1 gesiebter Sand mit einer Korngröße von 0 bis 0,5 mm. Der gesiebte Sand wird von dem Sandvorratsbehälter 1 einem Rieselbehälter 2 zugeführt. Im Rieselbehälter 3 sind Wärmekontaktflächen 4 angeordnet, die von einem Wärmeträger 5 temperiert werden. Im gezeigten Beispiel wird als Wärmeträger heißes Öl verwendet, welches dem Rieselbehälter 3 und insbesondere den darin angeordneten Wärmekontaktflächen 4 zugeführt wird. Der gesiebte Sand durchströmt den Rieselbehälter 3, zweckmäßigerweise unter Ausnutzung der Schwerkraft, wobei der gesiebte Sand an den Wärmekontaktflächen 4 entlang gleitet und dabei erwärmt wird. Der Aufbau des Rieselbehälters 3 und die Rieselgeschwindigkeit sind so aufeinander abgestimmt, dass der Sand den Rieselbehälter 3 mit einer Temperatur von etwa 300 bis 400°C verlässt. Die Erwärmung des Sandes im Rieselbehälter 3 erfolgt vorzugsweise unter Nutzung des Gegenstromprinzips, wobei die ausreichende Wärmezufuhr durch das heiße Öl sichergestellt werden muss. Um Wärmeverluste zu vermeiden, ist der Rieselbehälter 3 wärmeisoliert.

Weiterhin ist eine Dosiereinrichtung 6 vorhanden, die sowohl den erwärmten Sand als auch Kunststoff aus dem Kunststoffvorratsbehälter 2 empfängt. Die dargestellte Vorrichtung arbeitet mit zerkleinertem Abfallkunststoff, der in dem Kunststoffvorratsbehälter 2 gespeichert ist. In der Dosiereinrichtung wird die benötigte Menge Sand und Kunststoff abgewogen und kontinuierlich oder schrittweise in dem gewünschtem Verhältnis an einen Mischkessel 7 abgegeben.

Im Mischkessel 7 werden Sand und Kunststoff miteinander vermischt, wobei die Temperatur des Gemisches so hoch gehalten wird, dass der Kunststoff in den flüssigen Aggregatzustand übergeht. Dazu ist es zweckmäßig, den Mischkessel 7 ebenfalls wärmeisoliert aufzubauen und die zusätzlich benötigte Wärme wiederum durch den Wärmeträger 5 bereitzustellen, z.B. indem das heiße Öl ebenfalls geeigneten Wärmeübergangselementen im Mischkessel 7 eingespeist wird. Um Funktionsstörungen, wie beispielsweise verstopfte Zuführungsleistungen zu vermeiden, werden Kunststoff und Sand getrennt zu dem Mischkessel 7 geführt und erst in diesem vermischt. Der Mischkessel 7 kann weitere Zuführungsleistung aufweisen (nicht gezeigt), über welche andere Zusatzstoffe (z.B. Farbstoffe) zugeführt werden. Innerhalb des Mischkessels sind geeignete Mischelemente 8, z.B. Mischwalzen angeordnet.

Um gegebenenfalls entstehende Druckerhöhungen auszugleichen, besitzt der Mischkessel 7 ein Überdruckventil 9. Außerdem hat sich gezeigt, dass bei der Vermischung des erhitzten Sandes und des Kunststoffes die Gefahr von elektrostatischen Aufladungen besteht. Solche elektrostatischen Aufladungen können zur Selbstentzündung des Schmelzgemisches führen, da die Kunststoffe und die entstehenden Gase in der Regel brennbar sind. Bei einer Selbstentzündung besteht die Gefahr von Explosionen, wodurch die gesamte Vorrichtung gefährdet wäre. Um diese elektrostatischen Aufladungen zu vermeiden, ist eine Erdungselektrode 10 vorgesehen, über welche ein Potentialausgleich erfolgt und elektrische Spannungen abgeführt werden.

Das fertige Schmelzgemisch wird bei einer Temperatur von etwa 130°C (die jedenfalls oberhalb des Schmelzpunktes des jeweils verwendeten Kunststoffes liegt) aus dem Mischkessel abgeführt. Das Schmelzgemisch gelangt über entsprechende Transporteinrichtungen 11 zu beliebigen Pressformen 12, durch welche die Formgebung des zu erzeugenden Produktes erfolgen. In der Pressform 12 wird das Schmelzgemisch unter Aufrechterhaltung des oben näher erläuterten Drucks bis unter den Schmelzpunkt des Kunststoffs abgefüllt. Gewöhnlicherweise kann das erzeugte Werkstück bei einer Temperatur von etwa 60°C aus der Pressform entnommen werden und zum weiteren Abkühlen in eine Kühlform 13 überführt werden.

Der Fachmann wird erkennen, dass vielfältige Abwandlungen der erfindungsgemäßen Vorrichtung möglich sind und dass insbesondere eine Anpassung der Vorrichtung auf die jeweils herzustellenden Werkstücke erfolgen muss.

Neben den genannten Beispielen kann der erfindungsgemäße Werkstoff aufgrund seiner vielfältigen vorteilhaften Eigenschaften in unterschiedlichsten Bereichen eingesetzt werden. Es sind sowohl großflächige Erzeugnisse herstellbar, als auch filigrane Produkte, wenn ein Schmelzgemisch verwendet wird, in welchem Sand mit geringer Korngröße eingesetzt wird.

## Patentansprüche

1. Verfahren zur Herstellung eines Werkstoffs der aus Sand und Polymeren und gegebenenfalls weiteren Zuschlagstoffen besteht, die folgenden Schritte umfassend:
• Erhitzen des Sandes auf eine Temperatur von zwischen 300°C und 800°C;
• zuführen des erhitzten Sandes und des Polymers in einen geschlossenen Mischkessel (7), der eine Erdungselektrode (10) und ein Überdruckventil (9) besitzt, unter Aufrechterhaltung einer Mischtemperatur, die oberhalb der Schmelztemperatur des Polymers liegt;
• Mischen des Sandes und des Polymers zu Erzeugung eines heißen Schmelzgemisches;
• Einbringen des Schmelzgemisches in eine Preseform (12);
• Abkühlen des Schmelzgemisches unter Druck bis zum Erstarren des Schmelzgemisches in der Pressform;
• weiteres Abkühlen des erstarrten Werkstoffes unter Normaldruck.

2. Verfahren nach Anspruch 1, **dadurch gekennzeichnet, dass** in den erhitzten Sand unter stetigem Vermischen Polymere zugeführt werden, bis der Polymeranteil 15 bis 50% der Gesamtmasse des Schmelzgemisches beträgt.

3. Verfahren nach Anspruch 1, **dadurch gekennzeichnet, dass** in die Polymere der erhitzte Sand unter stetigem Vermischen zugeführt wird, bis der Sandanteil 50 bis 85% der Gesamtmasse des Schmelzgemisches beträgt.

4. Verfahren nach einem der Ansprüche 1 bis 3, **dadurch gekennzeichnet, dass** das Schmelzgemisch in der Pressform (12) bei einem Druck von 1 bis 40 kPa bis auf 60°C bis 100°C abgekühlt wird.

5. Verfahren nach einem der Ansprüche 1 bis 4, **dadurch gekennzeichnet, dass** vor der Erzeugung des heißen Schmelzgemisches zur Bereitstellung eines Polymergranulats Kunststoffabfälle zerkleinert werden.

6. Verfahren nach einem der Ansprüche 1 bis 5, **dadurch gekennzeichnet, dass** der Sand eine Korngröße von 0,5 bis 0,9 mm hat.

7. Verfahren nach Anspruch 3 , **dadurch gekennzeichnet, dass** der erhitzte Sand vor der Zuführung zu den Polymeren elektrisch entladen wird.

8. Verfahren nach einem der Ansprüche 1, bis 7, **dadurch gekennzeichnet, dass** das Polymer vor dem Vermischen mit dem Sand bis zum Schmelzen erhitzt wird.

9. Verfahren nach einem der Ansprüche 1 bis 8, **dadurch gekennzeichnet, dass** in das heiße Schmelzgemisch einer oder mehrere der folgenden Zuschlagstoffe eingemischt werden:
• organische oder anorganische Fasern;
• Farbstoffe;
• chemische Weichmacher;
• Plastifikatoren;
• Schmierstoffe;
• Silikate.

10. Verfahren nach einem der Ansprüche 1 bis 9, **dadurch gekennzeichnet, dass** während des Schrittes des Abkühlens unter Druck vor dem Erstarren des Werkstoffes feste Elemente in das Schmelzgemisch eingesetzt werden, um diese form- und kraftschlüssig im Werkstoff zu befestigen.

11. Verfahren nach einem der Ansprüche 1 bis 10, **dadurch gekennzeichnet, dass** es zur Herstellung eines der folgenden Gegenstände eingesetzt wird:
• Elektroisolationselemente,
• Bodenbelagelemente,
• Deckel für Zugangsöffnungen zu unterirdisch verlegten Kanälen.

12. Vorrichtung zur Ausführung eines Verfahrens nach einem der Ansprüche 1 bis 11, bestehend aus:
• einem Sandvorratsbehälter (1) und einem Kunststoffvorratsbehälter (2);
• einem Rieeelbehälter (3), dem vom Sandvorratsbehälter (1) Sand zugeführt wird, mit Wärmekontaktflächen (4), die von einem Wärmeträger (5) erwärmt werden und an denen der Sand erwärmt wird;
• einer Dosiereinrichtung (6), die vom Kunststoffvorratsbehälter (2) Kunststoff und vom Rieselbehälter (3) erwärmten Sand empfängt und voreingestellte Mengen abgibt;
• einem Mischkessel (7), der die voreingestellten Mengen Sand und Kunststoff von der Dosiereinrichtung (6) empfängt, miteinander vermischt und ein Schmelzgemisch abgibt;
• einer im Mischkessel (7) angeordneten Erdungselektrode (10) zur Ableitungen elektrostatischer Spannungen;
• einem am Mischkessel (7) angeordneten Überdruckventil (9), welches Überdruck im Mischkessel ableitet;
• einer Pressform (12), in welcher das vom Mischkessel (7) erhaltene Schmelzgemisch unter Druck bis zur Erstarrung abgekühlt wird.

## Claims

1. Process for the production of a material consisting of sand and polymers and, if necessary, further aggregates, which process comprises the following steps:
- heating of the sand to a temperature of between 300 °C and 800 °C ;
- passing the heated sand and the polymer into a closed mixing vessel (7) having an earth electrode (10) and a pressure relief valve (9) while maintaining a mixing temperature above the melting temperature of the polymer;
- mixing of the sand and the polymer to produce a hot melt mixture;
- introducing the melt mixture into a mould (12);
- cooling of the melt mixture under pressure to solidification of the melt mixture in the mould;
- further cooling of the solidified material under normal pressure.

2. Process according to claim 1, **characterised in that** polymers are introduced into the heated sand with continuous mixing until the proportion of polymer is 15 to 50 % of the total mass of the melt mixture.

3. Process according to claim 1, **characterised in that** the heated sand is introduced into the polymers with continuous mixing until the proportion of sand is 50 to 85 % of the total mass of the melt mixture.

4. Process according to claims 1 to 3, **characterised in that** the melt mixture is cooled in the mould (12) at a pressure of 1 to 40 kPa to 60°C to 100°C.

5. Process according to one of claims 1 to 4, **characterised in that** before producing the hot melt mixture for the provision of polymer granules, plastic waste is comminuted.

6. Process according to one of claims 1 to 5 **characterised in that** the sand has a grain size of 0.5 to 0.9 mm.

7. Process according to claim 3, **characterised in that**, before being passed to the polymers, the heated sand is electrically charged.

8. Process according to one of claims 1 to 7 **characterised in that** before mixing with the sand, the polymer is heated to the melting stage.

9. Process according to one of claims 1 to 8 **characterised in that** one or several of the following aggregates are mixed into in the hot melt mixture:
- organic or inorganic fibres;
- dyes;
- chemical plasticisers;
- plasticisers
- lubricants;
- silicates.

10. Process according to one of claims 1 to 9 **characterised in that,** during the step of cooling under pressure before solidification of the material, solid elements are introduced into the melt in order to fix these in a form and force compliant manner.

11. Process according to one of claims 1 to 10, **characterised in that** it can be used for the production of one of the following articles:
- electric insulation elements,
- floor covering elements;
- covers for access apertures to ducts laid underground.

12. Device for the execution of a process according to one of claims 1 to 11 consisting of:
- a sand storage container (1) and a plastic storage container (2);
- a trickle container (3) to which sand is passed from the storage container (1), with heat contact surfaces (4) which are heated by a heat carrier(5)and on which heat is heated;
- a metering device (6) which receives plastic from the plastic storage container (2) and sand heated by the trickle container (3) and discharges predetermined quantities;
- a mixing vessel (7) which receives the predetermined quantities of sand and plastic from the metering device (6), mixes them and discharges a melt mixture;
- an earthing electrode (10) arranged in the mixing vessel (7) for discharging electrostatic tensions;
- a pressure relief valve (9) arranged on the mixing vessel (7) which valve discharges excess pressure in the mixing vessel;
- a mould (12) in which the melt mixture received from the mixing vessel (7) is cooled under pressure to solidification.

## Revendications

1. Procédé pour la fabrication d'un matériau qui se compose de sable et de polymères ainsi qu'éventuellement d'autres adjuvants, comportant les étapes suivantes :
· chauffage du sable à une température comprise entre 300 °C et 800 °C ;
· alimentation du sable chauffé et du polymère dans une cuve de mélange (7) fermée, qui possède une électrode de mise à la terre (10) et une soupape de décharge (9), avec maintien d'une température de mélange qui se situe au dessus de la température de fusion du polymère;
· mélangeage du sable et du polymère en vue de la production d'un mélange fondu chaud ;
· introduction du mélange fondu dans un moule de formage (12);
· refroidissement sous pression du mélange fondu jusqu'à solidification du mélange fondu dans le moule de formage ;
· refroidissement poussé du matériau solidifié, sous pression normale.

2. Procédé selon la revendication 1, **caractérisé en ce que** dans le sable chauffé et avec mélangeage poussé permanent, des polymères sont alimentés jusqu'à ce que la fraction de polymères s'élève entre 15 et 50 % de la masse totale du mélange fondu.

3. Procédé selon la revendication 1, **caractérisé en ce que** dans les polymères le sable chauffé est alimenté avec mélangeage poussé permanent, jusqu'à ce que la fraction de sable s'élève entre 50 et 85 % de la masse totale du mélange fondu.

4. Procédé selon l'une des revendications 1 à 3, **caractérisé en ce que** le mélange fondu est, dans le moule de formage (12) et à une pression allant de 1 à 40 kPa, refroidi jusqu'à 60 °C à 100 °C.

5. Procédé selon l'une des revendications 1 à 4, **caractérisé en ce qu'**avant la production du mélange fondu chaud et en vue de la mise à disposition d'un granulat de polymère, des déchets de matières plastiques sont broyés.

6. Procédé selon l'une des revendications 1 à 5, **caractérisé en ce que** le sable possède une taille de grains allant de 0,5 à 0,9 mm.

7. Procédé selon la revendication 3, **caractérisé en ce que** le sable chauffé est, avant son alimentation vers les polymères, déchargé de son potentiel de charge électrique.

8. Procédé selon l'une des revendications 1 à 7, **caractérisé en ce que** le polymère est chauffé jusqu'à sa fusion, avant mélangeage avec le sable.

9. Procédé selon l'une des revendications 1 à 8, **caractérisé en ce que** dans le mélange fondu chaud sont introduits et mélangés un ou plusieurs des adjuvants suivants :
· fibres organiques ou minérales ;
· colorants ;
· agents chimiques de ramollissement ;
· plastifiants ;
· lubrifiants ;
· silicates.

10. Procédé selon l'une des revendications 1 à 9, **caractérisé en ce que** pendant l'étape de refroidissement sous pression et avant la solidification du matériau, des éléments solides sont mis en oeuvre dans le mélange fondu, afin d'assurer la fixation de ceux-ci au niveau de la géométrie ainsi que sur le plan de l'adhérence.

11. Procédé selon l'une des revendications 1 à 10, **caractérisé en ce qu'**il est mis en oeuvre en vue de la fabrication de l'un des objets suivants :
· éléments d'isolation électrique,
· éléments de revêtement de sol,
· plaques pour ouvertures d'accès à des égouts enterrés.

12. Dispositif pour l'exécution d'un procédé selon l'une des revendications 1 à 11, se composant de :
· un réservoir de sable (1) et un réservoir de matières plastiques (2) ;
· un réservoir de coulée (3), dans lequel du sable est alimenté en provenance du réservoir de sable (1) et qui comprend des surfaces de contact thermique (4), qui sont réchauffées par un fluide caloporteur (5) et le long desquelles le sable est réchauffé ;
· un équipement de dosage (6), qui reçoit de la matière plastique provenant du réservoir de matières plastiques (2), ainsi que du sable réchauffé provenant du réservoir de coulée (3), et qui délivre des quantités pré-ajustées ;
· une cuve de mélange (7) qui reçoit les quantités pré-ajustées de sable et de matière plastique provenant de l'équipement de dosage (6), qui les mélange intimement et délivre un mélange fondu ; · une électrode de mise à la terre (10), disposée dans la cuve de mélange (7) et destinée à évacuer des potentiels de charges électrostatiques ;
· une soupape de décharge (9), disposée sur la cuve de mélange (7) et qui évacue toute surpression existant dans la cuve de mélange;
· un moule de formage (12), dans lequel le mélange fondu provenant de la cuve de mélange (7) est refroidi sous pression jusqu'à solidification.
